(19) Europäisches Patentamt
European Patent Office
Office européen des brevets

(11) **EP 4 113 375 A1**

(12) **EUROPEAN PATENT APPLICATION**
published in accordance with Art. 153(4) EPC

(43) Date of publication:
**04.01.2023 Bulletin 2023/01**

(21) Application number: **21775239.3**

(22) Date of filing: **22.03.2021**

(51) International Patent Classification (IPC):
**G06K 9/62** (2022.01)    **G06N 3/04** (2006.01)
**G06N 3/08** (2006.01)    **G06F 16/55** (2019.01)

(86) International application number:
**PCT/CN2021/082086**

(87) International publication number:
**WO 2021/190451 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2020  CN 202010214454**

(71) Applicant: **Huawei Cloud Computing
Technologies Co., Ltd.
Guizhou 550025 (CN)**

(72) Inventors:
• **WEI, Longhui**
  **Shenzhen, Guangdong 518129 (CN)**
• **XIAO, An**
  **Shenzhen, Guangdong 518129 (CN)**
• **XIE, Lingxi**
  **Shenzhen, Guangdong 518129 (CN)**
• **TIAN, Qi**
  **Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **METHOD AND APPARATUS FOR TRAINING IMAGE PROCESSING MODEL**

(57)  A method for training an image processing model is provided. After an augmented image is obtained, a soft label of the augmented image is obtained, and the image processing model is trained based on guidance of the soft label, to improve performance of the image processing model. In addition, according to the method, the image processing model is trained based on guidance of a soft label, with a relatively high score, selected from soft labels of the augmented image, to further improve performance of the image processing model.

S910: Obtain a first soft label of an augmented image based on a first image processing model, where the augmented image is an image obtained by performing data augmentation on a training image by using a data augmentation policy, and the first soft label indicates a confidence level that the augmented image belongs to each of a plurality of classifications

S920: Train a second image processing model based on the augmented image and the first soft label of the augmented image

FIG. 9

EP 4 113 375 A1

## Description

This application claims priority to Chinese Patent Application No. 202010214454.4, filed with the China National Intellectual Property Administration on March 24, 2020, and entitled "METHOD AND APPARATUS FOR TRAINING IMAGE PROCESSING MODEL", which is incorporated herein by reference in its entirety.

## TECHNICAL FIELD

This application relates to the artificial intelligence field, and more specifically, to a method and an apparatus for training an image processing model in the computer vision field.

## BACKGROUND

Artificial intelligence (artificial intelligence, AI) is a theory, a method, a technology, and an application system that use a digital computer or a machine controlled by a digital computer to simulate, extend, and expand human intelligence, perceive an environment, obtain knowledge, and use the knowledge to obtain a best result. In other words, artificial intelligence is a branch of computer science that seeks to understand essence of intelligence and produce a new intelligent machine that reacts in a similar way to human intelligence. Artificial intelligence is to study design principles and implementation methods of various intelligent machines, to make the machines have functions of perception, reasoning, and decision-making. Research in the artificial intelligence field includes robotics, natural language processing, computer vision, decision-making and reasoning, human-computer interaction, recommendation and searching, AI basic theories, and the like.

With rapid development of the artificial intelligence technology, neural networks such as a deep neural network have made great achievements in processing and analysis of a plurality of types of media signals such as images, videos, and voices in recent years. A neural network with excellent performance usually needs a large amount of training data to obtain a desirable result. With limited data, data augmentation (data augmentation) can be used to increase diversity of training samples, improve robustness of network models, and avoid overfitting.

An automatic data augmentation technology is a quite popular data augmentation method in the industry currently. The technology is used to search a target task for a better or even the best data augmentation policy, and perform data augmentation on an existing training dataset by using the found data augmentation policy, to enrich the training dataset. Therefore, performance of a model can be greatly improved by using the augmented dataset to train the model.

Although the automatic data augmentation technology has been successful in various tasks, there are still many problems in actual application of the automatic data augmentation technology. The most critical problem is that the technology is generally used to perform a data augmentation policy search on an overall dataset, and a found policy may be desirable for the overall dataset but is not necessarily desirable for each image.

For example, a "translation along an x axis" operation can remove backgrounds of some images from the images, and this is clearly helpful for an image classification task. However, this operation may also remove main bodies of some images from the images, and this is clearly harmful to the task.

For another example, some brightness operations may also change original appearance of main bodies of images. As a result, a similarity between a changed image and its own classification becomes lower, and a similarity between the changed image and other classifications becomes lower.

Augmented images whose classification features of the main bodies of the images have been changed are collectively referred to as outliers obtained after data augmentation. Clearly, during model training, it is inappropriate to still use classification labels of the original images to guide these outliers, because this increases learning difficulty of an image processing model and degrades performance of the image processing model.

## SUMMARY

This application provides a method for training an image processing model, to help improve performance of a trained image processing model.

According to a first aspect, this application provides a method for training an image processing model. The method includes: obtaining a first soft label of an augmented image based on a first image processing model, where the augmented image is an image obtained by performing data augmentation on a training image by using a data augmentation policy, and the first soft label indicates a confidence level that the augmented image belongs to each of a plurality of classifications; and training a second image processing model based on the augmented image and the first soft label of the augmented image.

The first image processing model can be understood as a model for processing an image, and may include but is not limited to an image segmentation model, an image classification model, an object detection model, and an image recognition model. The first image processing model may include network models such as a convolutional neural network and a recurrent neural network. The first image processing model may also be referred to as a teacher model, and the second image processing model may be referred to as a student model. The training method in this application may be considered as a training method combining knowledge distillation and data augmentation.

The confidence level indicated by the first soft label may be a grade or a score indicating that the augmented image belongs to a corresponding classification, or may be a probability that the augmented image belongs to a corresponding classification.

When the second image processing model is trained based on the augmented image and the first soft label of the augmented image, the first soft label of the augmented image may be used as a supervision signal to guide parameter adjustment of the second image processing model.

When the augmentation policy is used for the training image to obtain the augmented image, a part of the augmentation policy has a destructive effect on the training image, and consequently the augmented image deviates significantly from the original training image. In this case, if the model is trained by using only a label of the original training image as a label of the augmented image, performance of the model is affected.

In the method in the first aspect, because the first soft label of the augmented image is obtained through prediction based on content in the augmented image, consistency between the content in the augmented image and the first soft label of the augmented image can be ensured to some extent. In this case, supervising training of the model based on the first soft label of the augmented image is conducive to improving the performance of the model.

In some possible implementations of the first aspect, the training a second image processing model based on the augmented image and the first soft label of the augmented image may include: obtaining a second soft label of the augmented image based on the second image processing model, where the second soft label indicates a confidence level that the augmented image belongs to each of the plurality of classifications; and adjusting a parameter of the second image processing model based on the first soft label and the second soft label.

The adjusting a parameter of the second image processing model based on the first soft label and the second soft label may include: determining a loss value of the second image processing model based on the first soft label and the second soft label, and adjusting the parameter of the second image processing model based on the loss value.

The adjusting a parameter of the second image processing model based on the first soft label and the second soft label may include: determining a relative entropy between the first soft label and the second soft label based on the first soft label and the second soft label; and adjusting the parameter of the second image processing model based on the relative entropy.

When the parameter of the second image processing model is adjusted based on the first soft label and the second soft label, the parameter of the second image processing model may be further adjusted in combination with a hard label of the augmented image. In other words, the parameter of the second image processing model may be adjusted based on the first soft label, the second soft label, and the hard label.

For example, a relative entropy between the first soft label and the second soft label may be determined based on the first soft label and the second soft label, a loss value of the second image processing model may be determined based on the relative entropy and the hard label, and the parameter of the second image processing model may be adjusted based on the loss value.

A first target soft label, a second target soft label, and the loss value may satisfy the following relationship:

$$L = y \cdot \ln f^{S} + \psi \cdot KL \left[ f^{S} \parallel f^{T} \right],$$

where

$L$ represents the loss value, Y represents the hard label of the augmented image, $KL[f^{S}\|f^{T}]$ represents a relative entropy between the first soft label and a target soft label, and $\psi$ is a preset value.

It is found through analysis that, when the second image processing model is trained based on the first soft label, it is not an optimal choice to perform training by using all confidence levels and all classification information in the first soft label as supervision signals. This is because a lower confidence level and a corresponding classification have a smaller supervision effect on model training and may even cause a misdirection situation.

Therefore, in some possible implementations of the first aspect, higher confidence levels and classification information corresponding to the confidence levels may be selected from the first soft label to train the second image processing module.

For example, in some possible implementations, the training a second image processing model based on the augmented image and the first soft label of the augmented image may include: determining the first target soft label based on the first soft label, where the first target soft label indicates a confidence level that the augmented image belongs to each of a plurality of target classifications, the plurality of target classifications include some of the plurality of classifications indicated by the first soft label, and a confidence level corresponding to each of the plurality of target classifications is greater than confidence levels corresponding to all classifications except the plurality of target classifications in the plurality of classifications indicated by the first soft label; and training the second image processing model based on the first target soft label and the augmented image.

In these implementations, higher confidence levels and classifications corresponding to the confidence levels are selected from the first soft label, as the first target soft label to adjust or supervise training of the second image processing model, thereby improving performance of the second image processing model.

The training the second image processing model based on the first target soft label and the augmented image may include: obtaining the second soft label of the augmented image based on the second image processing model, where the second soft label indicates the confidence level that the augmented image belongs to each of the plurality of classifications; determining the second target soft label based on the second soft label, where the second target soft label indicates a confidence level that the augmented image belongs to each of the plurality of target classifications and that is indicated by the second soft label; and adjusting the parameter of the second image processing model based on the first target soft label and the second target soft label.

The adjusting the parameter of the second image processing model based on the first target soft label and the second target soft label may include: determining the loss value of the second image processing model based on the first target soft label and the second target soft label; and adjusting the parameter of the second image processing model based on the loss value.

For example, a relative entropy between the first target soft label and the second target soft label may be determined based on the first target soft label and the second target soft label, and the loss value of the second image processing model may be computed based on the relative entropy.

The first target soft label, the second target soft label, and the loss value may satisfy the following relationship:

$$L = y \cdot \ln f^{S} + \psi \cdot KL\left[ f^{S} \parallel f^{T} \right],$$

where

$L$ represents the loss value, Y represents the hard label of the augmented image, $KL[f^{S}\|f^{T}]$ represents the relative entropy between the first target soft label and the second target soft label, and $\psi$ is the preset value.

According to a second aspect, an apparatus for training an image processing model is provided. The apparatus includes modules configured to perform the method in any one of the first aspect or the implementations of the first aspect.

According to a third aspect, an apparatus for training an image processing model is provided. The apparatus includes: a memory, configured to store a program; and a processor, configured to execute the program stored in the memory. When the program stored in the memory is being executed, the processor is configured to perform the method in any one of the first aspect or the implementations of the first aspect.

According to a fourth aspect, a computer-readable medium is provided. The computer-readable medium stores program code for execution by a device, and the program code includes instructions used to perform the method in any one of the first aspect or the implementations of the first aspect.

According to a fifth aspect, a computer program product including instructions is provided. When the computer program product runs on a computer, the computer is enabled to perform the method in any one of the first aspect or the implementations of the first aspect.

According to a sixth aspect, a chip is provided. The chip includes a processor and a data interface, and the processor reads, through the data interface, instructions stored in a memory, to perform the method in any one of the first aspect or the implementations of the first aspect.

Optionally, in an implementation, the chip may further include a memory. The memory stores instructions, and the processor is configured to execute the instructions stored in the memory. When the instructions are being executed, the processor is configured to perform the method in any one of the first aspect or the implementations of the first aspect.

According to a seventh aspect, a computing device is provided. The computing device includes: a memory, configured to store a program; and a processor, configured to execute the program stored in the memory. When the program stored in the memory is being executed, the processor is configured to perform the method in any one of the first aspect or the implementations of the first aspect.

According to an eighth aspect, this application provides a model training method. The method includes: obtaining a first soft label of augmented data based on a first model, where the augmented data is data obtained by augmenting training data by using a data augmentation policy, and the training data includes a training image, a training voice, or a training text; and training a second model based on the augmented data and the first soft label of the augmented data.

The first model may be a model that can perform correlation processing on correlation data. For example, the first model may be an image processing model, a voice recognition model, a text translation model, or a sentence retelling model. Correspondingly, the first soft label is a soft label in a related field for annotating data of a corresponding type.

When the second model is trained based on the augmented data and the first soft label of the augmented data, the first soft label of the augmented data may be used as a supervision signal to guide parameter adjustment of the second model.

When the augmentation policy is used for the training data to obtain the augmented data, a part of the augmentation policy has a destructive effect on the training data, and consequently the augmented data deviates significantly from the original training data. In this case, if the model is trained by using only a label of the original training data as a label of the augmented data, performance of the model is affected.

In the method in the eighth aspect, because the first soft label of the augmented data is obtained through prediction based on content in the augmented data, consistency between the content in the augmented data and the first soft label of the augmented data can be ensured to some extent. In this case, supervising training of the model based on the first soft label of the augmented data is conducive to improving the performance of the model.

In the method in the eighth aspect, for an implementation of training the second model based on the augmented data and the first soft label of the augmented data, refer to the implementation of training the second model based on the augmented image and the first soft label of the augmented image in the first aspect.

According to a ninth aspect, a model training apparatus is provided. The apparatus includes modules configured to perform the method in any one of the eighth aspect or the implementations of the eighth aspect.

According to a tenth aspect, a model training apparatus is provided. The apparatus includes: a memory, configured to store a program; and a processor, configured to execute the program stored in the memory. When the program stored in the memory is being executed, the processor is configured to perform the method in any one of the eighth aspect or the implementations of the eighth aspect.

According to an eleventh aspect, a computer-readable medium is provided. The computer-readable medium stores program code for execution by a device, and the program code includes instructions used to perform the method in any one of the eighth aspect or the implementations of the eighth aspect.

According to a twelfth aspect, a computer program product including instructions is provided. When the computer program product runs on a computer, the computer is enabled to perform the method in any one of the eighth aspect or the implementations of the eighth aspect.

According to a thirteenth aspect, a chip is provided. The chip includes a processor and a data interface, and the processor reads, through the data interface, instructions stored in a memory, to perform the method in any one of the eighth aspect or the implementations of the eighth aspect.

Optionally, in an implementation, the chip may further include a memory. The memory stores instructions, and the processor is configured to execute the instructions stored in the memory. When the instructions are being executed, the processor is configured to perform the method in any one of the eighth aspect or the implementations of the eighth aspect.

According to a fourteenth aspect, a computing device is provided. The computing device includes: a memory, configured to store a program; and a processor, configured to execute the program stored in the memory. When the program stored in the memory is being executed, the processor is configured to perform the method in any one of the eighth aspect or the implementations of the eighth aspect.

According to a fifteenth aspect, an image processing method is provided, including: obtaining a to-be-processed image; and processing the to-be-processed image by using a second image processing model, where the second image processing model is a model obtained through training by using the method according to any one of the first aspect or the implementations of the first aspect.

According to a sixteenth aspect, an apparatus for training an image processing model is provided. The apparatus includes modules configured to perform the method in any one of the fifteenth aspect or the implementations of the fifteenth aspect.

According to a seventeenth aspect, an apparatus for training an image processing model is provided. The apparatus includes: a memory, configured to store a program; and a processor, configured to execute the program stored in the memory. When the program stored in the memory is being executed, the processor is configured to perform the method in any one of the fifteenth aspect or the implementations of the fifteenth aspect.

According to an eighteenth aspect, a computer-readable medium is provided. The computer-readable medium stores program code for execution by a device, and the program code includes instructions used to perform the method in any one of the fifteenth aspect or the implementations of the fifteenth aspect.

According to a nineteenth aspect, a computer program product including instructions is provided. When the computer program product runs on a computer, the computer is enabled to perform the method in any one of the fifteenth aspect or the implementations of the fifteenth aspect.

According to a twentieth aspect, a chip is provided. The chip includes a processor and a data interface, and the processor reads, through the data interface, instructions stored in a memory, to perform the method in any one of the fifteenth aspect or the implementations of the fifteenth aspect.

Optionally, in an implementation, the chip may further include a memory. The memory stores instructions, and the processor is configured to execute the instructions stored in the memory. When the instructions are being executed, the processor is configured to perform the method in any one of the fifteenth aspect or the implementations of the fifteenth aspect.

According to a twenty-first aspect, a computing device is provided. The computing device includes: a memory, configured to store a program; and a processor, configured to execute the program stored in the memory. When the program stored in the memory is being executed, the processor is configured to perform the method in any one of the fifteenth aspect or the implementations of the fifteenth aspect.

According to a twenty-second aspect, a data processing method is provided, including: obtaining to-be-processed data, where the to-be-processed data includes a to-be-processed image, a to-be-processed voice, or a to-be-processed text; and processing the to-be-processed data by using a second model, where the second model is a model obtained through training by using the method according to any one of the eighth aspect or the implementations of the eighth aspect.

According to a twenty-third aspect, an apparatus for training a data processing model is provided. The apparatus includes modules configured to perform the method in any one of the twenty-second aspect or the implementations of the twenty-second aspect.

According to a twenty-fourth aspect, an apparatus for training a data processing model is provided. The apparatus includes: a memory, configured to store a program; and a processor, configured to execute the program stored in the memory. When the program stored in the memory is being executed, the processor is configured to perform the method in any one of the twenty-second aspect or the implementations of the twenty-second aspect.

According to a twenty-fifth aspect, a computer-readable medium is provided. The computer-readable medium stores program code for execution by a device, and the program code includes instructions used to perform the method in any one of the twenty-second aspect or the implementations of the twenty-second aspect.

According to a twenty-sixth aspect, a computer program product including instructions is provided. When the computer program product runs on a computer, the computer is enabled to perform the method in any one of the twenty-second aspect or the implementations of the twenty-second aspect.

According to a twenty-seventh aspect, a chip is provided. The chip includes a processor and a data interface, and the processor reads, through the data interface, instructions stored in a memory, to perform the method in any one of the twenty-second aspect or the implementations of the twenty-second aspect.

Optionally, in an implementation, the chip may further include a memory. The memory stores instructions, and the processor is configured to execute the instructions stored in the memory. When the instructions are being executed, the processor is configured to perform the method in any one of the twenty-second aspect or the implementations of the twenty-second aspect.

According to a twenty-eighth aspect, a computing device is provided. The computing device includes: a memory, configured to store a program; and a processor, configured to execute the program stored in the memory. When the program stored in the memory is being executed, the processor is configured to perform the method in any one of the twenty-second aspect or the implementations of the twenty-second aspect.

**BRIEF DESCRIPTION OF DRAWINGS**

FIG. 1 is a schematic diagram of a main body framework of artificial intelligence according to an embodiment of this application;

FIG. 2 is an example diagram of a structure of a convolutional neural network according to an embodiment of this application;

FIG. 3 is an example diagram of a structure of a convolutional neural network according to another embodiment of this application;

FIG. 4 is a schematic diagram of a system architecture according to an embodiment of this application;

FIG. 5 is a schematic diagram of deployment of a training apparatus according to an embodiment of this application;

FIG. 6 is a schematic diagram of a structure of a computing device according to an embodiment of this application;

FIG. 7 is a schematic diagram of a system architecture according to another embodiment of this application;

FIG. 8 is a schematic diagram of a hardware structure of a chip according to an embodiment of this application;

FIG. 9 is a schematic flowchart of a method for training an image processing model according to an embodiment of this application;

FIG. 10 is a schematic diagram of a structure of an apparatus for training an image processing model according to another embodiment of this application;

FIG. 11 is a schematic flowchart of an image processing method according to another embodiment of this application; and

FIG. 12 is a schematic diagram of a structure of an image processing apparatus according to another embodiment of this application.

## DESCRIPTION OF EMBODIMENTS

The following describes technical solutions of this application with reference to the accompanying drawings. It is clear that the described embodiments are merely some but not all of embodiments of this application. All other embodiments obtained by a person of ordinary skill in the art based on embodiments of this application without creative efforts shall fall within the protection scope of this application.

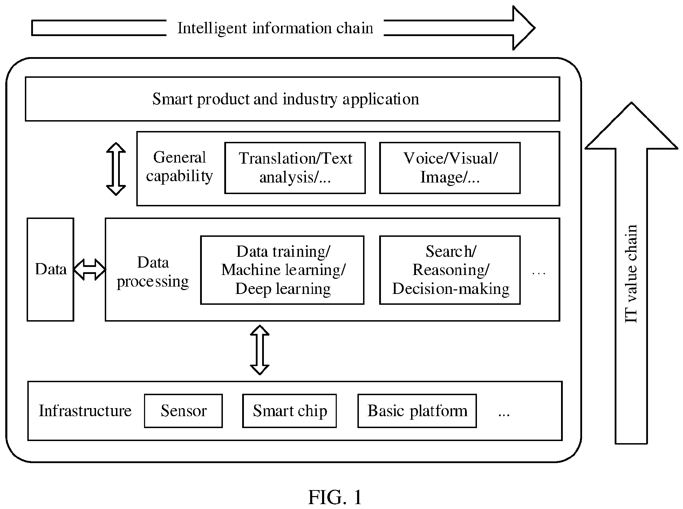

FIG. 1 is a schematic diagram of a main body framework of artificial intelligence. The main body framework describes an overall working process of an artificial intelligence system, and is applicable to general requirements of the artificial intelligence field.

The following describes the main body framework of artificial intelligence in two dimensions: an "intelligent information chain" (a horizontal axis) and an "IT value chain" (a vertical axis).

The "intelligent information chain" reflects a series of processes from data obtaining to data processing. For example, the processes may be general processes of intelligent information perception, intelligent information representation and formation, intelligent reasoning, intelligent decision-making, and intelligent execution and output. In this process, data undergoes a condensing process of "data - information - knowledge - wisdom".

The "IT value chain" reflects, from a perspective of an industrial ecological process from an underlying infrastructure and information (providing and processing technology implementation) of human intelligence to a system, value brought by artificial intelligence to the information technology industry.

(1) Infrastructure

An infrastructure provides computing capability support for an artificial intelligence system, implements communication with the outside world, and implements support by using basic platforms. Communication with the outside world is implemented by using a sensor. A computing capability is provided by a smart chip. The basic platforms include related assurance and support for platforms such as distributed computing frameworks and networks, and may include cloud storage and computing, network interworking, and the like. For example, a sensor communicates with the outside world to obtain data, and smart chips in distributed computing systems provided by the basic platforms are provided with the data for computing.

Smart chips include but are not limited to hardware acceleration chips such as a central processing unit (central processing unit, CPU), a neural network processing unit (neural-network processing unit, NPU), a graphics processing unit (graphics processing unit, GPU), an application-specific integrated circuit (application specific integrated circuit, ASIC), and a field programmable gate array (field programmable gate array, FPGA).

(2) Data

Data at a previous layer of the infrastructure is used to represent a data source in the artificial intelligence field. The data includes graphics, images, voices, and texts, and also includes Internet-of-things data of conventional devices, including service data of existing systems and perception data such as force, displacement, liquid level, temperature, and humidity.

(3) Data processing

Data processing usually includes data training, machine learning, deep learning, searching, reasoning, decision-making, and the like.

Machine learning and deep learning may be used to perform symbolic and formalized intelligent information modeling, extraction, preprocessing, training, and the like on data.

Reasoning refers to a process in which a computer or an intelligent system simulates human intelligence reasoning manners and uses formalized information to perform machine thinking and resolve problems according to a reasoning control policy. Typical functions are searching and matching.

Decision-making refers to a process of making decisions after reasoning is performed on intelligent information, and usually provides functions such as classification, sorting, and prediction.

(4) General capabilities

After the foregoing data processing is performed on data, some general capabilities may be further formed based on a result of the data processing. For example, the general capabilities may be algorithms or a general system such as translation, text analysis, computer vision processing, voice recognition, and image recognition.

(5) Smart products and industry applications

Smart products and industry applications are products and applications of an artificial intelligence system in various fields, embrace an overall artificial intelligence solution, implement productization of intelligent information decision-making, and implement eventual application. Application fields thereof mainly include smart manufacturing, intelligent transportation, smart households, smart medical care, intelligent security protection, autonomous driving, safe city, intelligent terminals, and the like.

In the main body framework of artificial intelligence to which technical solutions of this application can be applied, a basic framework may be a smart chip. Data processed by the basic platforms may include images. Data processing performed by the basic platforms may include data training. After the basic platforms perform the data processing on the data, general capabilities formed based on a result of the processing may include image processing. The image processing may include but is not limited to image classification, image recognition, image detection, and image segmentation. Smart products formed based on the general capabilities can be applied to many fields in artificial intelligence that need visual data analysis. For example, the smart products can be applied to fields that need visual data analysis, such as intelligent terminals, smart manufacturing, intelligent transportation, smart households, smart medical care, intelligent security protection, autonomous driving, and safe city.

The following briefly describes three common application scenarios to which technical solutions of this application can be applied.

Application scenario 1: Facial recognition systems

Facial recognition is one of the most widely used visual tasks currently, and can be widely used in fields such as finance, security protection, and logistics. This greatly improves security and convenience for people in urban life. Although accuracy of facial recognition systems is quite high in most scenarios currently, high accuracy of the facial recognition systems mainly depends on annotating a large amount of face data for performing model training.

However, in many scenarios, face data is difficult to collect. In these scenarios, an automatic data augmentation technology can be applied to facial recognition systems to enrich face data. A collected face training database may be input into an automatic data augmentation system for data augmentation, to obtain an augmented face training database. Then, a facial recognition model may be trained based on the augmented face training database by using a training system, to obtain a facial recognition system with high accuracy.

Technical solutions of this application are mainly used to optimize a data processing method, and specifically used to optimize a method for training a facial recognition model based on an augmented face training database by using a training system. For example, after the facial recognition model is trained based on augmented face training data, a soft label of training data in the augmented face training dataset is first predicted by using a facial recognition model with specific recognition accuracy, and then training of the facial recognition model is supervised based on the soft label and a hard label of the training data. In this way, an outlier problem caused by the automatic data augmentation technology to the facial recognition training system can be overcome in a desirable manner, thereby better improving recognition accuracy of the facial recognition model.

Application scenario 2: General object detection systems

General object detection is a common visual task currently, and may be performed on any input image by using a general object detection capability provided by a cloud service. Object detection is divided into two parts: positioning and recognition. Positioning indicates a problem of each object in an image, and recognition indicates a classification of each detected object.

A large amount of annotation data is also needed during training of the general object detection capability. In addition, in the conventional technology, the automatic augmentation technology can be applied to perform data augmentation on object detection training data. Therefore, the training solution of this application can also be applied to training of a general object detection model, to help improve object recognition accuracy in general object detection.

Related applications of a neural network are included in embodiments of this application. For better understanding of embodiments of this application, the following first describes possible related terms of a neural network and other related concepts in embodiments of this application.

(1) Neural network

A neural network may include neurons. The neuron may be an arithmetic unit with $x_s$ and an intercept 1 as inputs. An output of the arithmetic unit may be expressed as a formula (1-1):

$$h_{W,b}(x) = f(W^T x) = f(\sum_{S=1}^{n} W_S x_S + b) \qquad\qquad (1\text{-}1)$$

s=1, 2, ..., and n, n is a natural number greater than 1, $W_s$ represents a weight of $x_s$, and b represents a bias of a neuron. f represents an activation function (activation functions) of the neuron, and is used to introduce a nonlinear characteristic into the neural network to transform an input signal in the neuron into an output signal. The output signal of the activation function may be used as an input of a next convolutional layer. The activation function may be a sigmoid function. The neural network is a network formed by connecting a plurality of the foregoing individual neurons together. In other words, an output of a neuron may be an input of another neuron. An input of each neuron may be connected to a local receptive field of a previous layer to extract a feature of the local receptive field. The local receptive field may be a region including several neurons.

(2) Deep neural network

A deep neural network (deep neural network, DNN) is also referred to as a multilayer neural network, and can be understood as a neural network having a plurality of hidden layers. The DNN is divided based on locations of different layers. Neural networks inside the DNN may be classified into three types: an input layer, hidden layers, and an output layer. Generally, a first layer is the input layer, a last layer is the output layer, and middle layers are all the hidden layers. Layers are fully connected to each other. To be specific, any neuron at an $i^{th}$ layer is definitely connected to any neuron at an $(i+1)^{th}$ layer.

Although the DNN seems to be complex, work of each layer is actually not complex and is simply represented as the following linear relationship expression: $\vec{y} = \alpha(W \cdot \vec{x} + \vec{b})$. $\vec{x}$ represents an input vector, $\vec{y}$ represents an output vector, $\vec{b}$ represents an offset vector, $W$ represents a weight matrix (which is also referred to as a coefficient), and $\alpha()$ represents an activation function. For each layer, only such a simple operation is performed on an input vector $\vec{x}$ to obtain an output vector $\vec{y}$. Because there are many layers for the DNN, there are also many coefficients $W$ and offset vectors $\vec{b}$. These parameters are defined in the DNN as follows: The coefficient $W$ is used as an example. It is assumed that in a three-layer DNN, a linear coefficient from a fourth neuron at a second layer to a second neuron at a third layer is defined as $W_{24}^{3}$. The superscript 3 represents a layer number for the coefficient $W$, and the subscript corresponds to an output third-layer index 2 and an input second-layer index 4.

In summary, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter W for the input layer. In the deep neural network, more hidden layers make the network more capable of describing a complex case in the real world. Theoretically, a model with more parameters is more complex and has a higher "capacity", and this means that the model can accomplish more complex learning tasks. Training the deep neural network is a process of learning a weight matrix, and an ultimate objective of the training is to obtain weight matrices for all layers (weight matrices formed by vectors W of many layers) in the deep neural network obtained through training.

(3) Classifier

Last parts of many neural network structures each have a classifier for classifying objects in an image. The classifier generally includes a fully connected layer (fully connected layer) and a softmax function (which may be referred to as a normalized exponential function, or referred to as a normalized function for short) and can output different types of probabilities based on inputs.

(4) Convolutional neural network (convolutional neural network, CNN)

A convolutional neural network is a deep neural network of a convolutional structure. The convolutional neural network includes a feature extractor constituted by a convolutional layer and a subsampling layer. The feature extractor may be considered as a filter. A convolution process may be considered as performing convolution on an input image or a convolutional feature plane (feature map) by using a trainable filter. The convolutional layer is a neuron layer that is in the convolutional neural network and that performs convolution processing on an input signal. At the convolutional layer in the convolutional neural network, one neuron may be connected to only some neurons at an adjacent layer. A convolutional layer generally includes several feature maps, and each feature map may include some neurons arranged in a shape of a rectangle. Neurons on a same feature map share a weight, and the shared weight herein is a convolution kernel. The shared weight may mean that a manner of extracting image information is unrelated to a location. An implicit principle thereof is as follows: Statistical information of a part of an image is the same as that of other parts of the image. In other words, it means that image information learned from a part can also be applied to another part. Therefore, image information obtained through same learning can be used for all locations in the image. At a same convolutional layer, a plurality of convolution kernels may be used to extract different image information. Generally, more convolution kernels lead to richer image information reflected by a convolution operation.

A convolution kernel may be initialized in a form of a matrix of a random size. In a training process of the convolutional neural network, for the convolution kernel, a rational weight can be obtained through learning. In addition, direct advantages of the shared weight are reducing a quantity of connections between layers in the convolutional neural network, and reducing an overfitting risk.

(5) Back propagation algorithm

An error back propagation (back propagation, BP) learning algorithm may be used in a convolutional neural network to correct a value of a parameter in an initial super-resolution model in a training process, so that an error loss of reconstructing the super-resolution model becomes smaller. Specifically, an error loss occurs in a process from forward propagation of an input signal to output. In this case, error loss information is back-propagated to update the parameter in the initial super-resolution model, to make the error loss converge. The back propagation algorithm is an error loss-oriented back propagation process intended to obtain an optimal parameter such as a weight matrix for the super-resolution model.

(6) Recurrent neural network (recurrent neural networks, RNN)

An RNN is used for processing sequence data. In a conventional neural network model, an execution sequence is: an input layer, a hidden layer, and an output layer, layers are fully connected to each other, and nodes at each layer are not connected. However, such a common neural network is helpless to deal with many problems. For example, to predict a word in a sentence, a previous word usually needs to be used, because consecutive words in the sentence are dependent. A reason why the RNN is referred to as a recurrent neural network is that a current output of a sequence is also related to a previous output of the sequence. A specific representation form is that the network memorizes previous information and applies the previous information to computation of a current output. To be specific, nodes at a hidden layer are connected, and an input of the hidden layer includes not only an output of the input layer but also an output of the hidden layer at a previous moment. Theoretically, the RNN can process sequence data of any length.

Training the RNN is the same as training a conventional ANN (artificial neural network). They all use an error back propagation BP learning algorithm, but a difference lies in: If network unfolding is performed on RNNs, parameters W, U, and V are shared. However, this is not the case with the conventional neural network. In addition, during use of a gradient descent algorithm, an output of each step depends not only on a network of a current step, but also on network statuses of several previous steps. For example, when t=4, three backward steps further need to be passed, and various gradients need to be added to three subsequent steps. This learning algorithm is referred to as a back propagation through time algorithm.

(6) Loss function

In a process of training a deep neural network, it is expected that an output of the deep neural network is as much as possible close to a value that really needs to be predicted. Therefore, a predicted value of the current network and a really expected target value may be compared, and then a weight vector of each layer of the neural network is updated based on a difference between the predicted value and the target value (certainly, an initialization process is usually performed before first update, that is, a parameter is preconfigured for each layer in the deep neural network). For example, if a predicted value of the network is excessively large, a weight vector is adjusted to make the predicted value smaller, and adjustments are made continually until the deep neural network can predict a really expected target value or a value that is quite close to the really expected target value. Therefore, "how to obtain, through comparison, a difference between a predicted value and a target value" needs to be predefined. In this case, a loss function (loss function) or an objective function (objective function) can be used. The loss function and the objective function are important equations for measuring a difference between a predicted value and a target value. The loss function is used as an example. A larger output value (loss) of the loss function indicates a larger difference. Therefore, training the deep neural network is a process of minimizing the loss. The difference between the predicted value and the target value may be referred to as a loss value of the neural network.

(7) Data augmentation policy

One data augmentation policy includes one or more sub-policies. One sub-policy includes one or more operations. An operation is similar to an image processing function used for translation, rotation, or shearing, and one operation includes two hyperparameters. One hyperparameter is a probability of applying the operation, and the other hyperparameter is a magnitude (magnitude) of applying the operation.

An operation in a sub-policy may include any one of the following: shearing x coordinates, shearing y coordinates, flipping x coordinates, flipping y coordinates, rotation, auto-contrast adjustment, pixel inversion, histogram equalization, solarization, posterization, contrast adjustment, color enhancement, brightness adjustment, sharpness adjustment, cutout, sample pairing, and the like.

It can be understood that when one sub-policy includes a plurality of operations, types of the plurality of operations may be the same.

(8) Data augmentation

Data augmentation means performing transformation on existing data (for example, an image or a voice) according to a data augmentation policy, for example, performing an operation such as flipping, translation, or rotation, to create more data.

(9) Neural network model

A neural network model is a type of mathematical computation model that simulates a structure and a function of a biological neural network (a central nervous system of an animal). A neural network model may include a plurality of neural network layers with different functions, and each layer includes parameters and computation formulas. Different layers in the neural network model have different names based on different computation formulas or different functions. For example, a layer that performs convolution computation is referred to as a convolutional layer, and the convolutional layer is usually used to perform feature extraction on an input signal (for example, an image).

A neural network model may also be formed by combining a plurality of existing neural network models. Neural network models of different structures may be used in different scenarios (for example, classification, recognition, or image segmentation) or have different effects when being used in a same scenario. That structures of neural network models are different specifically includes one or more of the following cases: Quantities of network layers in neural network models are different, sequences of network layers are different, and weights, parameters, or computation formulas of network layers are different.

There are a plurality of different neural network models with high accuracy that are used for application scenarios such as recognition, classification, or image segmentation in the industry. Some neural network models may be trained by using a specific training set, and then trained neural network models complete a task alone or complete a task together with another neural network model (or another functional module). Some neural network models may be directly used to complete a task alone or complete a task together with another neural network model (or another functional module).

In embodiments of this application, a neural network model is referred to as a neural network for short.

(10) Edge device

An edge device is any device that has computing resources and network resources between a data generation source and a cloud center. For example, a mobile phone is an edge device between a person and a cloud center, and a gateway is an edge device between a smart household and a cloud center. In an ideal environment, an edge device is a device that analyzes or processes data in the vicinity of a data generation source. Because no data is transferred, network traffic and a response time are reduced.

The edge device in embodiments of this application may be a mobile phone having a computing capability, a tablet personal computer (tablet personal computer, TPC), a media player, a smart household, a laptop computer (laptop computer, LC), a personal digital assistant (personal digital assistant, PDA), a personal computer (personal computer, PC), a camera, a video camera, a smartwatch, a wearable device (wearable device, WD), an autonomous driving vehicle, or the like. It can be understood that a specific form of the edge device is not limited in embodiments of this application.

(11) Reasoning

Reasoning is relative to training, and means that after data is input into a neural network, the neural network outputs information such as a value of a loss function and a feature map without updating parameters of the neural network.

(12) Relative entropy (relative entropy)

A relative entropy is also referred to as KL divergence (Kullback-Leibler divergence) or information divergence (information divergence), and is an asymmetric measure of a difference between two probability distributions (probability distribution). In an information theory, the relative entropy is equivalent to a difference between Shannon entropies (Shannon entropy) of the two probability distributions.

Relative entropies are loss functions of some optimization algorithms such as an expectation-maximization algorithm (expectation-maximization algorithm, EM). In this case, one probability distribution involved in computation is a true distribution, and the other is a theoretical (or fitted) distribution. The relative entropy represents an information loss generated when the theoretical distribution is used to fit the true distribution.

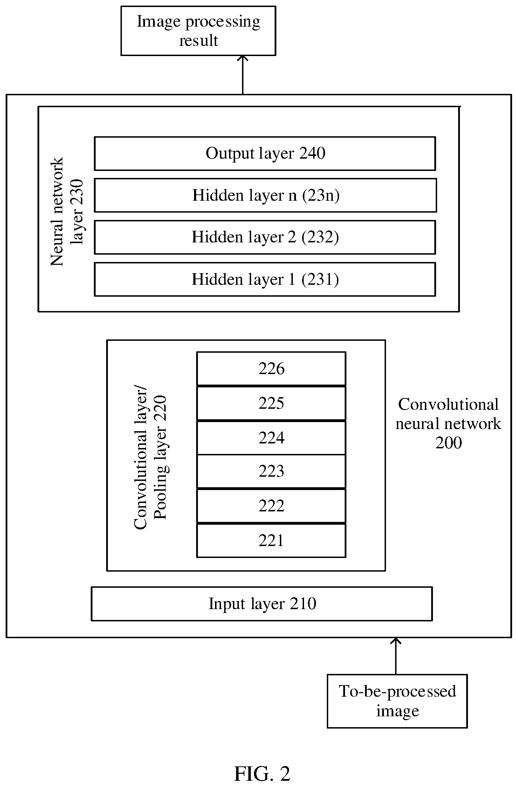

FIG. 2 is an example diagram of a structure of a convolutional neural network according to an embodiment of this application. As shown in FIG. 2, the convolutional neural network (CNN) 200 may include an input layer 210, a convolutional layer/pooling layer 220, and a neural network layer 230, where the pooling layer is optional.

Convolutional layer/pooling layer 220:

Convolutional layer:

The convolutional layer/pooling layer 220 shown in FIG. 2 may include layers 221 to 226 used as examples. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. In other words, an output of a convolutional layer may be used as an input of its subsequent pooling layer, or may be used as an input of another convolutional layer, to continue performing a convolution operation.

The convolutional layer 221 is used as an example. The convolutional layer 221 may include many convolution operators. The convolution operator is also referred to as a kernel, and a function of the convolution operator in image processing is equivalent to a filter that extracts specific information from an input image matrix. The convolution operator may be a weight matrix in essence, and the weight matrix is usually predefined. In a process of performing a convolution operation on an image, the weight matrix usually processes, on an input image, one pixel after another (or two pixels after other two pixels, and so on; it depends on a value of a stride stride) in a horizontal direction, to complete extraction of a specific feature from the image. A size of the weight matrix needs to be related to a size of the image. It should be noted that a depth dimension (depth dimension) of the weight matrix is the same as a depth dimension of the input image. During convolution computation, the weight matrix is extended to an entire depth of the input image. Therefore, convolution with a single weight matrix generates a convolutional output of a single depth dimension. However, in most cases, a single weight matrix is not used, but a plurality of weight matrices of same dimensions are used. Outputs of the weight matrices are stacked to form a depth dimension of a convolution image. Different weight matrices may be used to extract different features in an image. For example, one weight matrix is used to extract edge information of the image, one weight matrix is used to extract a specific color of the image, and another weight matrix is used to obscure unwanted noise in the image. The plurality of weight matrices are equal in dimensions. After extraction is performed by using the plurality of weight matrices of the same dimensions, obtained feature maps are also equal in dimensions, and the plurality of extracted feature maps of the same dimensions are concatenated to form an output of the convolution computation.

A weight in these weight matrices needs to be obtained through a large amount of training in actual application. Each weight matrix formed by using the weight obtained through training may be used to extract information from the input image, to help the convolutional neural network 200 make a correct prediction.

When the convolutional neural network 200 has a plurality of convolutional layers, an initial convolutional layer (for example, 221) usually extracts a large quantity of common features. The common features may also be referred to as low-level features. As a depth of the convolutional neural network 200 becomes deeper, a feature extracted by a deeper convolutional layer (for example, 226) is more complex, for example, a high-level semantic feature. A higher-level semantic feature is more suitable for resolving problems.

Pooling layer:

A quantity of training parameters usually needs to be reduced, and therefore a pooling layer usually needs to be periodically used after a convolutional layer. To be specific, for the layers 221 to 226 used as examples for 220 in FIG. 2, one convolutional layer may be followed by one pooling layer, or a plurality of convolutional layers may be followed by one or more pooling layers. During image processing, the pooling layer is only used to reduce a space size of an image. The pooling layer may include an average pooling operator and/or a maximum pooling operator for performing sampling on the input image, to obtain an image of a smaller size. The average pooling operator may be used to compute a pixel value of the image within a specific range to obtain an average value. The maximum pooling operator may be used to select a pixel with a maximum value within a specific range as a maximum pooling result. In addition, similar to that the size of the weight matrix at the convolutional layer needs to be related to the size of the image, an operator at the pooling layer also needs to be related to the size of the image. A size of the processed image that is output from the pooling layer may be less than a size of the image that is input into the pooling layer. Each pixel in the image that is output from the pooling layer represents an average value or a maximum value of a corresponding sub-region of the image that is input into the pooling layer.

Neural network layer 230:

After processing is performed by the convolutional layer/pooling layer 220, the convolutional neural network 200 is insufficient to output needed output information. This is because the convolutional layer/pooling layer 220 only extracts a feature and reduces a quantity of parameters brought by the input image, as described above. However, to generate final output information (needed classification information or other related information), the convolutional neural network 200 needs to use the neural network layer 230 to generate one output or one group of outputs whose quantity is equal to a quantity of needed classifications. Therefore, the neural network layer 230 may include a plurality of hidden layers (231, 232, ..., and 23n shown in FIG. 2) and an output layer 240. Parameters included in the plurality of hidden layers may be obtained through pre-training based on related training data of specific task types. For example, the task types may include image recognition, image classification, and image super-resolution reconstruction.

The plurality of hidden layers in the neural network layer 230 are followed by the output layer 240, that is, a last layer in the entire convolutional neural network 200. The output layer 240 has a loss function similar to a classification cross-entropy, which is specifically used to compute a prediction error. Once forward propagation (as shown in FIG. 2, propagation from 210 to 240 is the forward propagation) in the entire convolutional neural network 200 is completed, a weight and a deviation of each layer that are mentioned above start to be updated through back propagation (as shown in FIG. 2, propagation from 240 to 210 is the back propagation), to reduce a loss of the convolutional neural network 200 and an error between a result that is output by the convolutional neural network 200 by using the output layer and an ideal result.

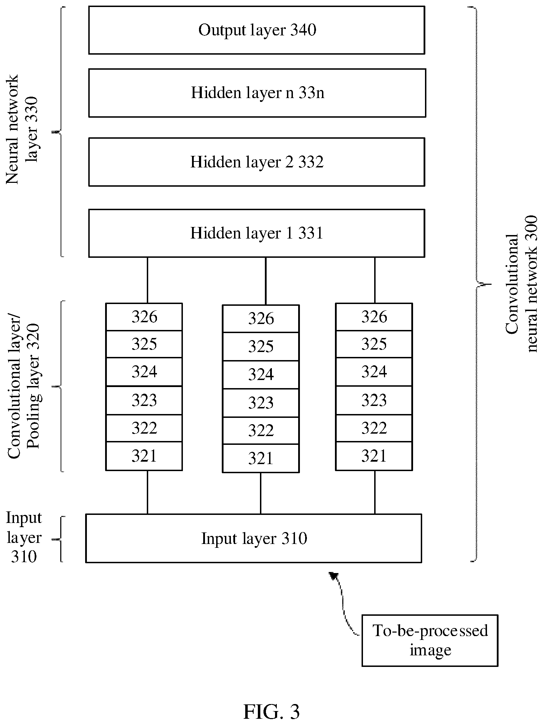

It should be noted that the convolutional neural network 200 shown in FIG. 2 is merely used as an example of the convolutional neural network. In specific application, the convolutional neural network may alternatively exist in a form of another network model. For example, a plurality of convolutional layers/pooling layers shown in FIG. 3 are concurrent, and input all separately extracted features into an entire neural network layer 330 for processing.

The convolutional neural network shown in FIG. 2 or FIG. 3 may constitute a first model described in the following content, and is used to determine a first soft label of augmented data based on the augmented data. For example, the convolutional neural network shown in FIG. 2 or FIG. 3 may constitute a first image processing model described in the following content, and is used to predict an augmented image to obtain a first soft label of the first augmented image.

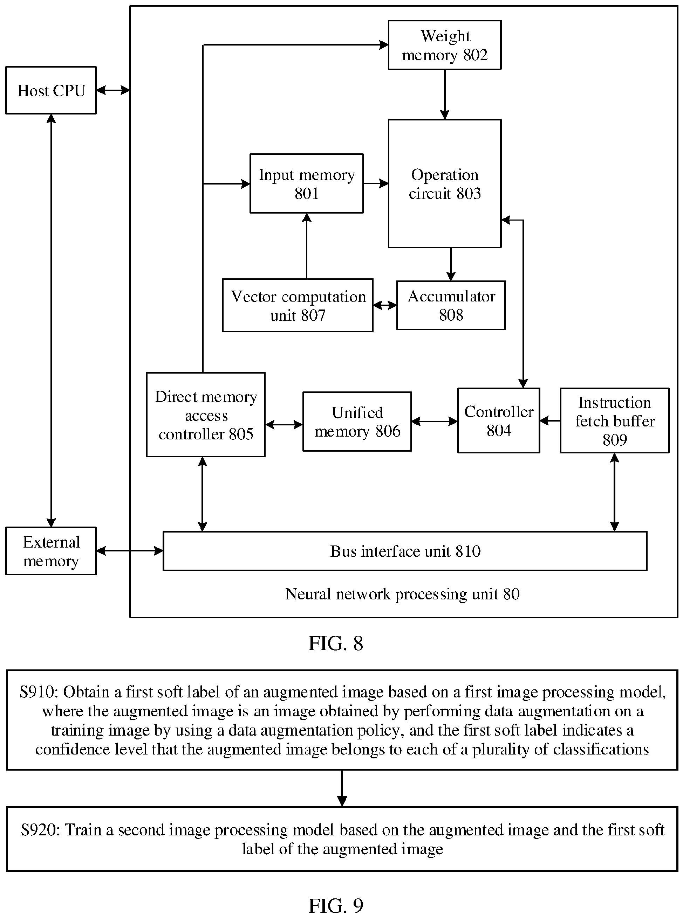

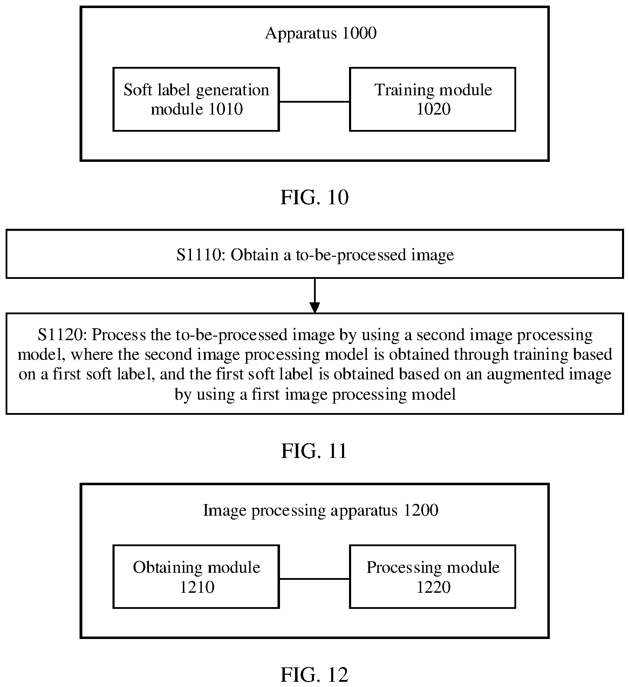

The convolutional neural network shown in FIG. 2 or FIG. 3 may constitute a teacher model described in the following content, and a parameter of the teacher model may be obtained through training by using a training method shown in FIG. 9 or FIG. 12. For example, the convolutional neural network shown in FIG. 2 or FIG. 3 may constitute a second image processing model described in the following content, and a parameter of the second image processing model may be obtained through training by using the training method shown in FIG. 9. For another example, the second image processing model constituted by the convolutional neural network shown in FIG. 2 or FIG. 3 may perform an image processing method shown in FIG. 11.

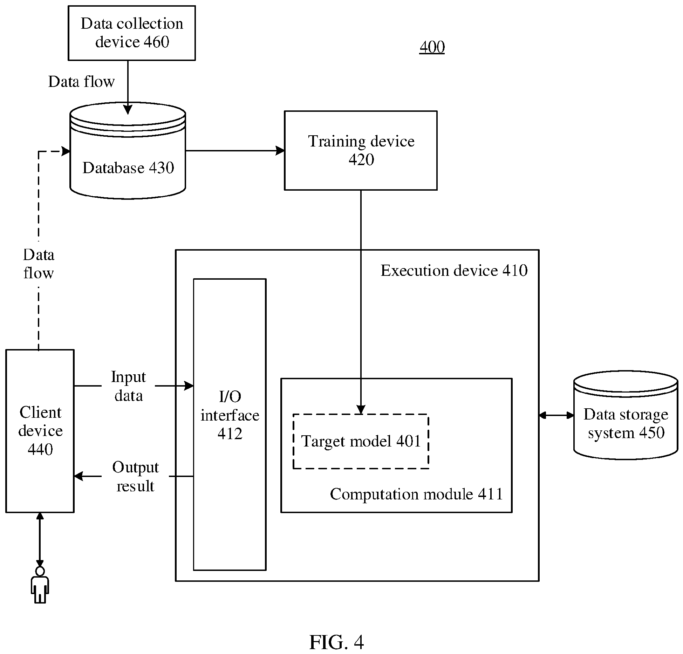

FIG. 4 is a schematic diagram of a system architecture according to an embodiment of this application. As shown in FIG. 4, the system architecture 400 includes an execution device 410, a training device 420, a database 430, a client device 440, a data storage system 450, and a data collection system 460.

The data collection device 460 is configured to collect training data. After the training data is collected, the data collection device 460 stores the training data in the database 430. The training device 420 performs, by using a data augmentation policy, data augmentation on the training data maintained in the database 430, to obtain augmented data; obtains a soft label of the augmented data by using a teacher model; and trains a student model based on the augmented data and the soft label of the augmented data to obtain a target model 401. In this embodiment of this application, the target model may also be referred to as a target rule.

The target model 401 in this embodiment of this application may be specifically a neural network. For example, the target model 401 may be an image processing model such as an image recognition, image segmentation, image detection, or image classification model. More specifically, for example, the target model 401 may be a facial recognition model; for another example, the target model 401 may be a general object detection model.

It should be noted that in actual application, the training data maintained in the database 430 is not necessarily all collected by the data collection device 460, and may be received from another device. It should also be noted that, the training device 420 does not necessarily perform training to obtain the target model 401 totally based on the training data maintained in the database 430, and may perform model training by obtaining training data from a cloud client or another place. The foregoing description should not impose any limitation on this embodiment of this application.

The target model 401 obtained through training by the training device 420 can be applied to different systems or devices, for example, applied to the execution device 410 shown in FIG. 4.

The execution device 410 may be a terminal, for example, a mobile phone terminal, a tablet computer, a laptop computer, an augmented reality (augmented reality, AR)/virtual reality (virtual reality, VR), or a vehicle-mounted terminal; may be a chip that can be applied to the foregoing devices; or may be a server, a cloud client, or the like.

In FIG. 4, an input/output (input/output, I/O) interface 412 is configured for the execution device 410, and is configured to exchange data with an external device. A user may enter data to the I/O interface 412 by using the client device 440. In addition, the execution device 410 includes a computation module 411. The computation module 411 includes the target model 401 obtained through training by the training device 420 based on the augmented data and the soft label of the augmented data.

In a process in which the computation module 411 of the execution device 410 performs related processing on to-be-processed data by using the target model 401, the execution device 410 may invoke data, code, and the like in the data storage system 450 to perform corresponding processing, or may store data, instructions, and the like that are obtained through corresponding processing in the data storage system 450.

Finally, the I/O interface 412 presents a processing result such as a facial recognition result or an object detection structure obtained through computation by the target model 401 to the client device 440, to provide the processing result for the user.

It can be understood that the execution device 410 and the client device 440 in this embodiment of this application may be a same device, for example, a same terminal device.

It should be noted that the training device 420 may perform data augmentation on different training data for different objectives or different tasks (or services) according to different data augmentation policies, to obtain different augmented data; obtain soft labels of the different augmented data by using different teacher networks; and obtain target models 401 through training based on the soft labels of the different augmented data. Then, the target models 401 may be used to achieve the objectives or accomplish the tasks, to provide needed results for the user.

In FIG. 4, the user may enter data through manual designation. The manual designation may be performed by using a screen provided on the I/O interface 412. In another case, the client device 440 may automatically send input data to the I/O interface 412. If it is required that user authorization should be obtained for the client device 440 to automatically send input data, the user may set corresponding permission in the client device 440. The user may view, in the client device 440, the result output by the execution device 410. A specific presentation form may be displaying, sound, action, or another specific manner. The client device 440 may also be used as a data collection end to collect, as new sample data, the input data input into the I/O interface 412 and the output result output from the I/O interface 412 that are shown in FIG. 4, and store the new sample data in the database 430. Certainly, alternatively, the client device 440 may not perform collection. The I/O interface 412 directly uses, as new sample data, the input data input into the I/O interface 412 and the output result output from the I/O interface 412 that are shown in FIG. 4, and stores the new sample data in the database 430.

For example, the data collection device 460 may collect the training data and store the training data in the database 430. The training data may include a training image and annotation data. The annotation data presents coordinates of a bounding box (bounding box) of a target object in the training image. The training device 420 augments the training image in the database 430 by invoking a data augmentation policy in the data storage system 450, to obtain an augmented image; obtains a soft label of the augmented image by invoking the teacher model in the data storage system 450; and trains a student model based on the augmented image and the soft label of the augmented image to obtain a target model 401. After the target model 401 is deployed on the execution device 410, the client device 440 may collect the to-be-processed image, and transmit the to-be-processed image to the execution device 410 by using the I/O interface 412. The execution device 410 processes the to-be-processed image by using the target model 401 deployed on the execution device 410, and transmits the to-be-processed image to the client device by using the I/O interface 412.

For an implementation in which the training device 420 obtains the soft label of the augmented image based on the teacher model and trains the student model based on the augmented image and the soft label of the augmented image, refer to related content in FIG. 9.

It can be understood that FIG. 4 is merely a schematic diagram of a system architecture according to this embodiment of this application, and location relationships between devices, components, and modules that are shown in the figure do not impose any limitation. For example, in FIG. 4, the data storage system 450 is an external memory relative to the execution device 410. In other cases, the data storage system 450 may be alternatively disposed in the execution device 410.

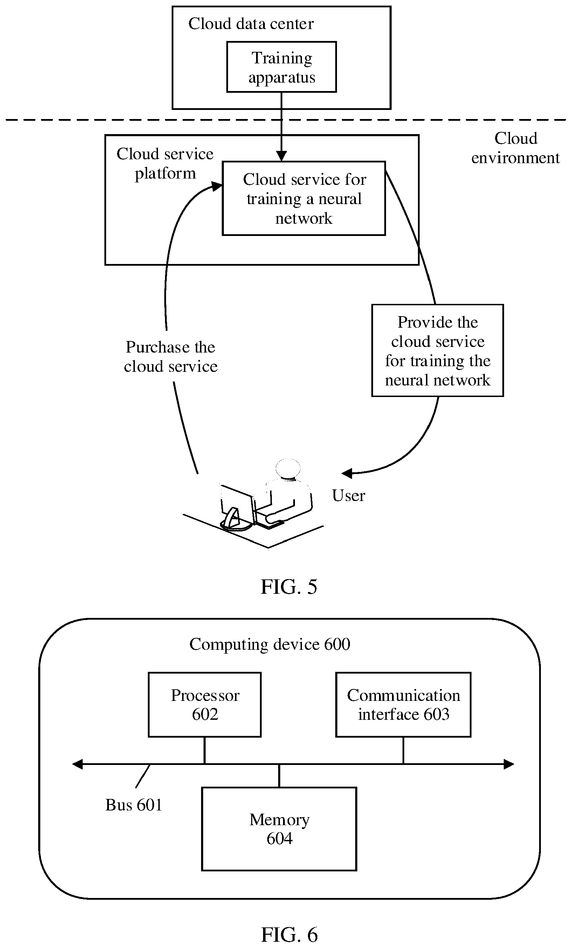

FIG. 5 is a schematic diagram of deployment of a training apparatus according to an embodiment of this application. The training apparatus may be deployed in a cloud environment, and the cloud environment is an entity that provides a cloud service for a user by using basic resources in a cloud computing mode. The cloud environment includes a cloud data center and a cloud service platform. The cloud data center includes a large quantity of basic resources (including computing resources, storage resources, and network resources) owned by a cloud service provider. The computing resources included in the cloud data center may be a large quantity of computing devices (for example, servers).

The training apparatus may be a server that is in the cloud data center and that trains a model based on a soft label of augmented data.

The training apparatus may be alternatively a virtual machine that is created in the cloud data center and that trains a model based on a soft label of augmented data.

The training apparatus may be alternatively a software apparatus deployed on a server or a virtual machine in the cloud data center. The software apparatus is configured to train a model based on a soft label of augmented data. The software apparatus may be deployed on a plurality of servers in a distributed manner, deployed on a plurality of virtual machines in a distributed manner, or deployed on virtual machines and servers in a distributed manner.

For example, when the training apparatus includes a module configured to obtain the soft label of the augmented data and a module configured to train the model based on the soft label of the augmented data, these modules may be deployed on a plurality of servers in a distributed manner, deployed on a plurality of virtual machines in a distributed manner, or deployed on virtual machines and servers in a distributed manner.

As shown in FIG. 5, the training apparatus may be abstracted by the cloud service provider on the cloud service platform, as a cloud service for training the model based on the soft label of the augmented data, and the cloud service is provided for the user. After the user purchases the cloud service on the cloud service platform, the cloud environment provides, by using the cloud service, the user with a cloud service for training a neural network.

For example, the user may upload a to-be-trained neural network (and may further upload an original training set) to the cloud environment by using an application programming interface (application program interface, API) or by using a web page interface provided by the cloud service platform. The training apparatus receives the to-be-trained neural network and the original training set; performs data augmentation on the original training set by using a data augmentation policy; trains the to-be-trained neural network by using an augmented dataset; and returns a target neural network finally obtained through training to an edge device of the user.

For another example, the user may upload a to-be-trained neural network (and may further upload an augmented dataset) to the cloud environment by using an application programming interface or by using a web page interface provided by the cloud service platform. The training apparatus receives the to-be-trained neural network and the augmented dataset; trains the to-be-trained neural network by using the augmented dataset; and returns a target neural network finally obtained through training to an edge device of the user.

For example, the user may upload a type of a target task to the cloud environment by using an application programming interface or by using a web page interface provided by the cloud service platform, and may further upload an original training set. The training apparatus receives the type of the target task and the original training set; performs data augmentation on the original training set by using an augmentation policy, to obtain an augmented training set; trains a target neural network of this type by using the augmented training set; and returns a target neural network finally obtained through training to an edge device of the user.

That the to-be-trained model is an image processing model is used as an example. The user may upload, to the cloud environment by using an application programming interface or by using a web page interface provided by the cloud service platform, a type of a target task being image processing (for example, facial recognition or object detection). The training apparatus receives the type of the target task; performs data augmentation on an original training image by using an augmentation policy, to obtain an augmented image; obtains a soft label of the augmented image by using a teacher network; trains a student network by using the augmented image and the soft label of the augmented image; and returns an image processing model finally obtained through training to an edge device of the user.

For an implementation in which the training apparatus obtains the soft label of the augmented image based on the teacher model and trains the student model based on the augmented image and the soft label of the augmented image, refer to related content in FIG. 9.

When the training apparatus is a software apparatus, the training apparatus may be alternatively deployed independently on one computing device in any environment, for example, deployed independently on one computing device or deployed independently on one computing device in the data center.

FIG. 6 is an example diagram of a structure of a computing device according to an embodiment of this application. As shown in FIG. 6, the computing device 600 includes a bus 601, a processor 602, a communication interface 603, and a memory 604.

The processor 602, the memory 604, and the communication interface 603 communicate with each other through the bus 601. The processor 602 may be a central processing unit. The memory 604 may include a volatile memory (volatile memory), for example, a random access memory (random access memory, RAM). The memory 604 may further include a non-volatile memory (2non-volatile memory, 2NVM), for example, a read-only memory (2read-only memory, 2ROM), a flash memory, a hard disk drive (hard disk drive, HDD), or a solid-state drive (solid-state drive, SSD). The memory 604 stores executable code included in the training apparatus, and the processor 602 reads the executable code in the memory 604 to perform a training method. The memory 604 may further include another software module needed for process running, such as an operating system. The operating system may be Linux™, Unix™, Windows™, or the like.

For example, the memory 604 stores executable code for obtaining a soft label of augmented data and for training a model based on the soft label of the augmented data. The processor 602 reads and executes the executable code, to obtain the soft label of the augmented data and train the model based on the soft label of the augmented data, so as to obtain a trained target model. The communication interface 603 transmits the target model to an execution device, so that the execution device performs a related task by using the target model.

That the target model is an image processing model (for example, facial recognition or object detection) is used as an example. The memory 604 stores executable code for obtaining a soft label of an augmented image and for training the image processing model based on the soft label of the augmented image. The processor 602 reads and executes the executable code, to obtain the soft label of the augmented image and train the model based on the soft label of the augmented image, so as to obtain a target image processing model. The communication interface 603 transmits the target image processing model to the execution device, so that the execution device performs processing (facial recognition or object detection) on a to-be-processed image by using the target image processing model.

For an implementation in which the computing device 600 obtains the soft label of the augmented image and trains the image processing model based on the augmented image and the soft label of the augmented image, refer to related content in FIG. 9.

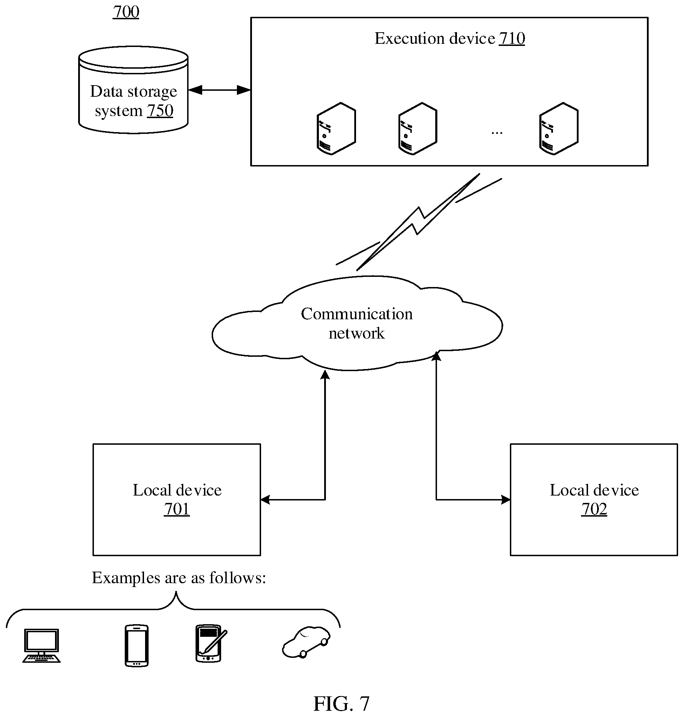

FIG. 7 is a schematic diagram of a system architecture according to another embodiment of this application. An execution device 710 is implemented by one or more servers. Optionally, the execution device 710 may cooperate with another computing device, for example, a data storage device, a router, or a load balancer. The execution device 710 may be disposed on one physical site, or distributed on a plurality of physical sites. The execution device 710 may implement a data processing method in this application, for example, the image processing method shown in FIG. 11, by using data in a data storage system 750 or by invoking program code in the data storage system 750.

Users may operate respective user devices (for example, a local device 701 and a local device 702) to interact with the execution device 710. Each local device may represent any computing device, for example, a personal computer, a computer workstation, a smartphone, a tablet computer, a smart camera, a smart car, another type of cellular phone, a media consumption device, a wearable device, a set top box, or a game console.

A local device of each user may interact with the execution device 710 by using a communication network of any communication mechanism/communication standard. The communication network may be a wide area network, a local area network, a point-to-point connection, another network, or any combination thereof.

For example, an image processing model obtained through training by using the method shown in FIG. 9 may be deployed on the execution device 710. After collecting a to-be-processed image, the local device 702 may upload the to-be-processed image to the execution device 710. The execution device 710 processes the to-be-processed image by using the image processing model, to obtain a processing result.

For example, a facial recognition model obtained through training by using the method shown in FIG. 9 may be deployed on the execution device 710. After collecting a to-be-recognized image, the local device 702 may upload the to-be-recognized image to the execution device 710. The execution device 710 performs facial recognition on the to-be-recognized image by using the facial recognition model, to obtain information about a face in the to-be-recognized image.

For another example, an object detection model obtained through training by using the method shown in FIG. 9 may be deployed on the execution device 710. After collecting a to-be-detected image, the local device 702 may upload the to-be-detected image to the execution device 710. The execution device 710 detects the to-be-detected image by using the object detection model, to obtain a location and a classification of an object in the to-be-detected image.

In another implementation, one or more aspects of the execution device 710 may be implemented by each local device. For example, the local device 701 may provide local data for the execution device 710 or feed back a computation result to the execution device 710.

It should be noted that all functions of the execution device 710 may be alternatively implemented by a local device. For example, the local device 701 implements functions of the execution device 710 and provides services for a user of the local device 701, or provides services for a user of the local device 702.

FIG. 8 is a schematic diagram of a hardware structure of a chip according to an embodiment of this application. The neural network processing unit NPU 80 that serves as a coprocessor is mounted on a host CPU (Host CPU), and the host CPU allocates a task. A core part of the NPU is an operation circuit 803, and a controller 804 controls the operation circuit 803 to extract matrix data from a memory and to perform a multiplication operation.

In some implementations, the operation circuit 803 includes a plurality of processing engines (process engine, PE). In some implementations, the operation circuit 803 is a two-dimensional systolic array. Alternatively, the operation circuit 803 may be a one-dimensional systolic array, or another electronic circuit that can perform mathematical operations such as a multiplication and addition. In some implementations, the operation circuit 803 is a general matrix processor.

For example, it is assumed that there are an input matrix A, a weight matrix B, and an output matrix C. The operation circuit extracts corresponding data of the matrix B from a weight memory 802, and buffers the corresponding data into each PE in the operation circuit. The operation circuit extracts data of the matrix A from an input memory 801, performs a matrix operation between the data of the matrix A and the matrix B to obtain a partial matrix result or a final matrix result, and stores the result in an accumulator (accumulator) 808.

A unified memory 806 is configured to store input data and output data. Weight data is migrated to the weight memory 802 directly by using a direct memory access controller (direct memory access controller, DMAC) 805, and the input data is also migrated to the unified memory 806 by using the DMAC.

A bus interface unit (bus interface unit, BIU) 810 is configured to implement interaction between the DMAC and an instruction fetch buffer (instruction fetch buffer) 809 through an AXI bus.

The bus interface unit 810 is used by the instruction fetch buffer 809 to obtain instructions from an external memory, and is further used by the direct memory access controller 805 to obtain original data of the input matrix A or original data of the weight matrix B from the external memory.

The DMAC is mainly configured to migrate the input data in the external memory DDR to the unified memory 806, migrate the weight data to the weight memory 802, or migrate the input data to the input memory 801.

A vector computation unit 807 has a plurality of operation processing units, and performs further processing on the output of the operation circuit if necessary, for example, performs vector multiplication, vector addition, an exponential operation, a logarithmic operation, and value comparison. The vector computation unit 807 is mainly used for non-convolutional layer/non-FC layer network computation in a neural network, for example, pooling (Pooling), batch normalization (Batch Normalization), and local response normalization (Local Response Normalization).

In some implementations, the vector computation unit 807 can store a processed output vector in the unified buffer 806. For example, the vector computation unit 807 may apply a nonlinear function to the output of the operation circuit 803, for example, a vector of an accumulated value, to generate an activation value. In some implementations, the vector computation unit 807 generates a normalized value, a combined value, or a normalized value and a combined value. In some implementations, the processed output vector can be used as an activation input to the operation circuit 803, for example, used by a subsequent layer in the neural network.

The instruction fetch buffer (instruction fetch buffer) 809 connected to the controller 804 is configured to store instructions to be used by the controller 804.

The unified memory 806, the input memory 801, the weight memory 802, and the instruction fetch buffer 809 are all on-chip (On-Chip) memories. The external memory is private to the NPU hardware architecture.

When a training method in this application is implemented by using the chip shown in FIG. 8, the host CPU may obtain a first soft label of augmented data by using a teacher model, and obtain a second soft label of the augmented data by using the neural network processing unit 80. Then, the host CPU may adjust a parameter of a student model based on the first soft label and the second soft label.

For example, the host CPU may obtain a first soft label of an augmented image by using a first image processing model, and obtain a second soft label of the augmented image by using the neural network processing unit 80. Then, the host CPU may adjust a parameter of a second image processing model based on the first soft label and the second soft label, to train the second image processing model. For an implementation of each step, refer to related content in FIG. 9.

FIG. 9 is a schematic flowchart of a method for training an image processing model according to an embodiment of this application. The method includes S910 and S920.

S910: Obtain a first soft label of an augmented image based on a first image processing model, where the augmented image is an image obtained by performing data augmentation on a training image by using a data augmentation policy, and the first soft label indicates a confidence level that the augmented image belongs to each of a plurality of classifications.

The first image processing model may also be referred to as a teacher model (or a teacher network). For a method for performing data augmentation on the training image by using the data augmentation policy to obtain the augmented image, refer to the conventional technology. Details are not described in this application.

In an implementation of this step, one original training image is sampled from a training data warehouse each time, and after the original training image is augmented by using the data augmentation policy to generate a corresponding augmented image, the augmented image is used as an input of the teacher model. In the teacher model, after a forward propagation process of the augmented image is performed, a corresponding output, namely, a soft label of the augmented image, is obtained. For ease of description, the soft label is referred to as a first soft label.

S920: Train a second image processing model based on the augmented image and the first soft label of the augmented image.

The second image processing model may be a same model as the first image processing model, or may be a model with higher or lower performance than the first image processing model. The second image processing model may be referred to as a student model (or a student network). That the second image processing model is a same model as the first image processing model may mean that the first image processing model and the second image processing model are models of a same structure. That performance of the first image processing model is higher than that of the second image processing model may mean that accuracy of the first image processing model in respect of a target task is higher than accuracy of the first image processing model in respect of the target task.

When the second image processing model is trained based on the augmented image and the first soft label of the augmented image, the first soft label and a real label manually annotated for the augmented image may be used as combined constraints to guide training of the second image processing model. In comparison with training the second image processing model by using only the manual label and the augmented image, because the first soft label provides another beneficial constraint, problems of low performance and low training efficiency of the second image processing model that are caused by structural damage to the augmented image relative to the original image can be effectively overcome.

For example, when the second image processing model is trained by using each augmented image obtained according to the data augmentation policy, two types of supervision signals may be used to guide model optimization. A first type of supervision signal may be obtained through computation by using a cross-entropy loss function commonly used in conventional model training. Specifically, the first type of supervision signal may be obtained by computing a cross-entropy between a second soft label that is output by the second image processing model based on the augmented image and the real manual label of the augmented image. A second type of supervision signal is KL divergence, and may be obtained by computing KL divergence between the second soft label that is output by the second image processing model based on the augmented image and the first soft label. Finally, the two types of supervision signals may be combined to supervise the training of the second image processing model.

An example expression of the loss function of the second image processing model is as follows:

$$L = y \cdot \ln f^S + \psi \cdot KL\left[ f^S \parallel f^T \right]$$

, where

$L$ represents a loss value, Y represents the manual label, $f^S$ represents the second soft label, $f^T$ represents the first soft label, $KL[f^S \parallel f^T]$ represents KL divergence between the first soft label and the second soft label, and $\psi$ is usually preset.

In the loss function, $y \cdot \ln f^S$ can be understood as the first type of supervision signal, $KL[f^S \parallel f^T]$ can be understood as the second type of supervision signal, and $\psi$ is a balance factor between the two types of supervision signals.

An actual loss value of the second image processing model may be computed based on the loss function and the two types of supervision signals, and a parameter of the second image processing model is adjusted based on the loss value.

For data warehouses including different dataset images, it may not be an optimal choice to use all information about the first soft label and all information about the second soft label as supervision signals for training during computation of the KL divergence between the second soft label and the first soft label of the model. Therefore, the second type of supervision signal can be further optimized for different data warehouses.

For example, based on characteristics of the dataset images, the first K confidence levels with higher confidence levels and corresponding K pieces of classification information may be selected from the first soft label, and confidence levels corresponding to the K pieces of classification information may be selected from the second soft label; and the second type of supervision signal is obtained through computation based on the selected information. Therefore, the second type of supervision signal in the loss function may be obtained through computation by using the following formula:

$$KL\left[ f^S \parallel f^T \right] = \sum f_c^T \cdot \ln \frac{f_c^S}{f_c^T}$$

, where

$f_c^T$ represents the first K confidence levels with higher confidence levels in the first soft label, $f_c^S$ represents the K confidence levels in the second soft label, and classifications corresponding to the K confidence levels are identical in a one-to-one manner to classifications corresponding to the first K confidence levels in the first soft label.

The method in this embodiment can be understood as training the image processing model by jointly using a knowledge distillation method and a data augmentation method.

In this embodiment, a soft label is predicted for each augmented image by using the teacher network, and the KL divergence is computed by using the soft label, to constrain network training. In addition, because accuracy of the teacher network is imperfect, this solution also uses a manual label of the original training image to guide augmented data, that is, uses a cross-entropy to constrain network training. Therefore, the two types of supervision signals, namely, a KL supervision signal and a cross-entropy supervision signal, are both used for guidance in the network training process. The KL supervision signal can alleviate impact of outliers in the augmented data on network training, and the cross-entropy supervision signal can alleviate impact of inaccuracy of the first soft label generated by using the teacher network.

FIG. 10 is a schematic diagram of a structure of an apparatus 1000 for training an image processing model according to an embodiment of this application. The apparatus may include a soft label generation module 1010 and a model training module 1020.

The soft label generation module 1010 may be configured to perform S910, and the model training module 1020 may be configured to perform S920.

FIG. 11 is a schematic flowchart of an image processing method according to an embodiment of this application. The method may include S1110 and S1120.

S1110: Obtain a to-be-processed image.

S1120: Process the to-be-processed image by using a second image processing model, where the second image processing model is obtained through training based on a first soft label, and the first soft label is obtained based on an augmented image by using a first image processing model.

Specifically, the second image processing model may be a second image processing model obtained through training by using the method shown in FIG. 9. Details are not described herein again.

FIG. 12 is a schematic diagram of a structure of an image processing apparatus 1200 according to an embodiment of this application. The apparatus may include an obtaining module 1210 and a processing module 1220.

The obtaining module 1210 may be configured to perform S1110, and the processing module 1220 may be configured to perform S1120.

For different networks, network accuracy obtained through training based on public datasets CIFAR by using the method in this application and network error rates obtained through training based on the public datasets CIFAR by using existing methods are listed in Table 1.

In Table 1, NA is an English acronym for "no automatic data augmentation" (No Augmentation), and indicates that values in this corresponding column are network error rates obtained through training without using an automatic data augmentation technology. AA is an English acronym for automatic augmentation (AutoAugment), and indicates that values in this corresponding column are network error rates obtained through training by using the automatic data augmentation technology. FAA is an English acronym for Fast AutoAugment, and indicates that values in this corresponding column are network error rates obtained through training by using a fast automatic augmentation technology. PBA is an English acronym for Population Based Augmentation, and indicates that values in this corresponding column are network error rates obtained through training by using a population-based automatic data augmentation technology. RA is an English acronym for RandAugment, and indicates that values in this corresponding column are network error rates obtained through training by using a random automatic data augmentation technology. "-" indicates that there is no corresponding value.

**Table 1: Network error rates obtained through training based on the public datasets CIFAR by using various training methods**

| Dataset name | Network name | NA | AA | FAA | PBA | RA | Method in this application |
|---|---|---|---|---|---|---|---|
| CIFAR-10 | Wide-ResNet-28-10 | 3.9 | 2.6 | 2.7 | 2.6 | 2.7 | 2.4 |
| CIFAR-10 | Shake-Shake(26 2*32D) | 3.6 | 2.5 | 2.7 | 2.5 | - | 2.3 |
| CIFAR-10 | Shake-Shake(26 2*96D) | 2.9 | 2.0 | 2.0 | 2.0 | 2.0 | 1.8 |
| CIFAR-10 | Shake-Shake(26 2*112D) | 2.8 | 1.9 | 2.0 | 2.0 | - | 1.9 |
| CIFAR-10 | PyramidNet+ShakeDrop | 2.7 | 1.5 | 1.8 | 1.5 | 1.5 | 1.5 |
| CIFAR-100 | Wide-ResNet-28-10 | 18.8 | 17.1 | 17.3 | 16.7 | 16.7 | 16.2 |
| CIFAR-100 | Shake-Shake(26 2*96D) | 17.1 | 14.3 | 14.9 | 15.3 | - | 13.8 |

(continued)

| Dataset name | Network name | NA | AA | FAA | PBA | RA | Method in this application |
|---|---|---|---|---|---|---|---|
| CIFAR-100 | PyramidNet+ShakeDrop | 14.0 | 10.7 | 11.9 | 10.9 | - | 10.6 |

For different networks, network accuracy obtained through training based on standard large datasets ImageNet by using the method in this application and network accuracy obtained through training based on the standard large datasets ImageNet by using the existing methods are listed in Table 2.

**Table 2: Network accuracy obtained through training based on the standard large datasets ImageNet by using various training methods**

| Network name | Parameter (mega/M) | Extra training data | Top-1 (%) |
|---|---|---|---|
| ResNet-152 | 60M | - | 77.8 |
| DenseNet-264 | 34M | - | 77.9 |
| Inception-v4 | 48M | - | 80.0 |
| ResNeXt-101 | 84M | - | 80.9 |
| SENet | 146M | - | 82.7 |
| NASNet-A | 89M | - | 82.7 |
| AmoebaNet-C | 155M | - | 83.5 |
| GPipe | 557M | - | 84.3 |
| EfficientNet-B7 (RA) | 66M | - | 85.0 |
| EfficientNet-B8 (RA) | 88M | - | 85.4 |
| EfficientNet-L2 (AA) | 480M | - | 85.5 |
| EfficientNet-B8 (AA+AdvProp) | 88M | - | 85.5 |
| ResNeXt-101 Billion-scale | 193M | 3.5B tagged images | 84.8 |
| FixRes ResNeXt-101 | 829M | 3.5B tagged images | 86.4 |
| EfficientNet-L2 (Noisy Student) | 480M | 300M unlabeled images | 88.4 |
| EfficientNet-B7 (Ours) | 66M | - | 85.5 |
| EfficientNet-B8 (Ours) | 88M | - | 85.7 |

In Table 2, accuracy corresponding to the first eight rows and the thirteenth row is network Top 1 accuracy obtained through training after training data is processed by using a standard data processing method; accuracy corresponding to the ninth row to the eleventh row is network Top1 accuracy obtained through training after training data is processed by using the random automatic data augmentation technology; accuracy corresponding to the twelfth row is network Top1 accuracy obtained through adversarial training (AdvProp) after data is processed by using the automatic data augmentation technology; accuracy corresponding to the fourteenth row is network Top1 accuracy obtained through training after training data is processed by using the random automatic data augmentation method; and accuracy corresponding to the last two rows is network Top1 accuracy obtained through training by using the method in this application. Top1 accuracy is accuracy of a classification with a highest probability in network output results. Extra training data (Extra Training Data) is other training data used together with the standard training datasets ImageNet during training. 3.5B tagged images indicate that 3.5 billion tagged images are further used, and 300M unlabeled images indicate that 300 million unlabeled images are further used.

It can be learned from Table 1 and Table 2 that the training method in this application reaches a leading level in image classification accuracy.

A model training method in an embodiment of this application may include the following steps.

Step 1: Perform data augmentation on training data by using an augmentation policy searched for according to the automatic data augmentation technology or a manually specified augmentation policy, to obtain augmented data.

The training data may be voice data, image data, text data, or the like, and correspondingly the augmented data is voice data, image data, or text data.

Step 2: Input the augmented data into a teacher network to obtain a soft label of the augmented data.

Step 3: Train a student model based on the augmented data, the soft label of the augmented data, and a manual label of the training data, to obtain a trained model.

For example, for each piece of augmented data, a soft label is predicted by using the teacher network and a soft label of the augmented data is predicted by using the student network. KL divergence between the two soft labels is computed to constrain training of the student network. The KL divergence may be referred to as a KL supervision signal.

In addition, because accuracy of the teacher network is imperfect, this solution also uses a manual label of the original data to guide the augmented data. For example, a cross-entropy between the manual label and the soft label predicted by using the teacher network is computed to constrain the training of the student network. The cross-entropy may be referred to as a cross-entropy supervision signal.

The two types of supervision signals, namely, the KL supervision signal and the cross-entropy supervision signal, are both used for guidance in the training process of the student network; and the KL supervision signal can alleviate impact of outliers in the augmented data on the training of the student network, and the cross-entropy supervision signal can alleviate impact of possible inaccuracy of the soft label generated by using the teacher network. Therefore, the technical solution of this embodiment can improve performance of a trained student network and improve training efficiency.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units. To be specific, the parts may be located in one position, or may be distributed on a plurality of network units. Some or all of the units may be selected according to an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform some or all of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A method for training an image processing model, comprising:

    obtaining a first soft label of an augmented image based on a first image processing model, wherein the augmented image is an image obtained by performing data augmentation on a training image by using a data augmentation policy, and the first soft label indicates a confidence level that the augmented image belongs to each of a plurality of classifications; and
    training a second image processing model based on the augmented image and the first soft label of the augmented image.

2.  The method according to claim 1, wherein the training a second image processing model based on the augmented image and the first soft label of the augmented image comprises:

    determining a first target soft label based on the first soft label, wherein the first target soft label indicates a confidence level that the augmented image belongs to each of a plurality of target classifications, the plurality of target classifications comprise some of the plurality of classifications indicated by the first soft label, and a confidence level corresponding to each of the plurality of target classifications is greater than confidence levels corresponding to all classifications except the plurality of target classifications in the plurality of classifications indicated by the first soft label; and
    training the second image processing model based on the first target soft label and the augmented image.

3.  The method according to claim 2, wherein the training the second image processing model based on the first target soft label and the augmented image comprises:

    obtaining a second soft label of the augmented image based on the second image processing model, wherein the second soft label indicates a confidence level that the augmented image belongs to each of the plurality of classifications;
    determining a second target soft label based on the second soft label, wherein the second target soft label indicates a confidence level that the augmented image belongs to each of the plurality of target classifications and that is indicated by the second soft label; and
    adjusting a parameter of the second image processing model based on the first target soft label and the second target soft label.

4.  The method according to claim 3, wherein the adjusting a parameter of the second image processing model based on the first target soft label and the second target soft label comprises:

    determining a loss value of the second image processing model based on the first target soft label and the second target soft label; and
    adjusting the parameter of the second image processing model based on the loss value.

5.  The method according to claim 4, wherein the first target soft label, the second target soft label, and the loss value satisfy the following relationship:

$$L = y \cdot \ln f^{S} + \psi \cdot KL\left[ f^{S} \Box f^{T} \right],$$

    wherein
    $L$ represents the loss value, $y$ represents a hard label of the augmented image, $KL[f^{S}\Box f^{T}]$ represents a relative entropy between the first target soft label and the second target soft label, and $\psi$ is a preset value.

6.  An image processing method, comprising:

    obtaining a to-be-processed image; and
    processing the to-be-processed image by using a second image processing model, wherein the second image processing model is a model obtained through training by using the method according to any one of claims 1 to 5.

7.  An apparatus for training an image processing model, comprising:

an obtaining module, configured to obtain a first soft label of an augmented image based on a first image processing model, wherein the augmented image is an image obtained by performing data augmentation on a training image by using a data augmentation policy, and the first soft label indicates a confidence level that the augmented image belongs to each of a plurality of classifications; and

a training module, configured to train a second image processing model based on the augmented image and the first soft label of the augmented image.

8. The apparatus according to claim 7, wherein the training module is specifically configured to:

determine a first target soft label based on the first soft label, wherein the first target soft label indicates a confidence level that the augmented image belongs to each of a plurality of target classifications, the plurality of target classifications comprise some of the plurality of classifications indicated by the first soft label, and a confidence level corresponding to each of the plurality of target classifications is greater than confidence levels corresponding to all classifications except the plurality of target classifications in the plurality of classifications indicated by the first soft label; and

train the second image processing model based on the first target soft label and the augmented image.

9. The apparatus according to claim 8, wherein the training module is specifically configured to:

obtain a second soft label of the augmented image based on the second image processing model, wherein the second soft label indicates a confidence level that the augmented image belongs to each of the plurality of classifications;

determine a second target soft label based on the second soft label, wherein the second target soft label indicates a confidence level that the augmented image belongs to each of the plurality of target classifications and that is indicated by the second soft label; and

adjust a parameter of the second image processing model based on the first target soft label and the second target soft label.

10. The apparatus according to claim 9, wherein the training module is specifically configured to:

determine a loss value of the second image processing model based on the first target soft label and the second target soft label; and

adjust the parameter of the second image processing model based on the loss value.

11. The apparatus according to claim 10, wherein the first target soft label, the second target soft label, and the loss value satisfy the following relationship:

$$L = y \cdot \ln f^{S} + \psi \cdot KL \left[ f^{S} \Box f^{T} \right],$$

wherein

$L$ represents the loss value, $y$ represents a hard label of the augmented image, $KL[f^{S} \Box f^{T}]$ represents a relative entropy between the first target soft label and the second target soft label, and $\psi$ is a preset value.

12. An image processing apparatus, comprising:

an obtaining module, configured to obtain a to-be-processed image; and

a processing module, configured to process the to-be-processed image by using a second image processing model, wherein the second image processing model is a model obtained through training by using the method according to any one of claims 1 to 5.

13. An apparatus for training an image processing model, comprising a processor, wherein the processor is coupled to a memory;

the memory is configured to store instructions; and

the processor is configured to execute the instructions stored in the memory, so that the apparatus performs the method according to any one of claims 1 to 5.

**14.** An image processing apparatus, comprising a processor, wherein the processor is coupled to a memory;

the memory is configured to store instructions; and
the processor is configured to execute the instructions stored in the memory, so that the apparatus performs the method according to claim 6.

**15.** A computer-readable medium comprising instructions, wherein when the instructions are run on a processor, the processor is enabled to perform the method according to any one of claims 1 to 5.

**16.** A computer-readable medium comprising instructions, wherein when the instructions are run on a processor, the processor is enabled to perform the method according to claim 6.

Intelligent information chain

Smart product and industry application

General capability | Translation/Text analysis/... | Voice/Visual/ Image/...

Data

Data processing | Data training/ Machine learning/ Deep learning | Search/ Reasoning/ Decision-making | ...

Infrastructure | Sensor | Smart chip | Basic platform | ...

IT value chain

FIG. 1

| Image processing result |
| --- |

**Neural network layer 230**

| Output layer 240 |
| --- |
| Hidden layer n (23n) |
| Hidden layer 2 (232) |
| Hidden layer 1 (231) |

**Convolutional layer/ Pooling layer 220**

| 226 |
| --- |
| 225 |
| 224 |
| 223 |
| 222 |
| 221 |

Convolutional neural network 200

| Input layer 210 |
| --- |

| To-be-processed image |
| --- |

FIG. 2

FIG. 3

FIG. 4

Cloud data center

Training apparatus

Cloud service platform

Cloud service for training a neural network

Cloud environment

Purchase the cloud service

Provide the cloud service for training the neural network

User

FIG. 5

Computing device 600

Processor 602

Communication interface 603

Bus 601

Memory 604

FIG. 6

700

Data storage system 750

Execution device 710

...

Communication network

Local device 701

Local device 702

Examples are as follows:

FIG. 7

Weight
memory 802

Host CPU

Input memory
801

Operation
circuit 803

Vector computation
unit 807

Accumulator
808

Direct memory
access
controller 805

Unified
memory 806

Controller
804

Instruction
fetch buffer
809

External
memory

Bus interface unit 810

Neural network processing unit 80

FIG. 8

S910: Obtain a first soft label of an augmented image based on a first image processing model, where the augmented image is an image obtained by performing data augmentation on a training image by using a data augmentation policy, and the first soft label indicates a confidence level that the augmented image belongs to each of a plurality of classifications

S920: Train a second image processing model based on the augmented image and the first soft label of the augmented image

FIG. 9

Apparatus 1000

| Soft label generation module 1010 | Training module 1020 |

FIG. 10

S1110: Obtain a to-be-processed image

S1120: Process the to-be-processed image by using a second image processing model, where the second image processing model is obtained through training based on a first soft label, and the first soft label is obtained based on an augmented image by using a first image processing model

FIG. 11

Image processing apparatus 1200

| Obtaining module 1210 | Processing module 1220 |

FIG. 12

## INTERNATIONAL SEARCH REPORT

| | International application No. |
|---|---|
| | **PCT/CN2021/082086** |

**A. CLASSIFICATION OF SUBJECT MATTER**

G06K 9/62(2006.01)i; G06N 3/04(2006.01)i; G06N 3/08(2006.01)i; G06F 16/55(2019.01)i

According to International Patent Classification (IPC) or to both national classification and IPC

**B. FIELDS SEARCHED**

Minimum documentation searched (classification system followed by classification symbols)

G06K; G06N; G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 图像, 训练, 分类, 类别, 标签, 增强, 迁移, 蒸馏, 教师, 老师, 学生, 损失, image, train +, classif+, label+, enhanc+, migration, transfer, distillation, teacher, student, loss

**C. DOCUMENTS CONSIDERED TO BE RELEVANT**

| Category* | Citation of document, with indication, where appropriate, of the relevant passages | Relevant to claim No. |
|---|---|---|
| PX | CN 111507378 A (HUAWEI TECHNOLOGIES CO., LTD.) 07 August 2020 (2020-08-07) claims 1-16 | 1-16 |
| Y | CN 110147456 A (SHENZHEN INSTITUTES OF ADVANCED TECHNOLOGY, CHINESE ACADEMY OF SCIENCES) 20 August 2019 (2019-08-20) description paragraphs 0059-0124, 0167, 0182 | 1-16 |
| Y | CN 104517122 A (ZHEJIANG UNIVERSITY) 15 April 2015 (2015-04-15) description, paragraphs 0010-0019 | 1-16 |
| A | CN 110222718 A (HUAWEI TECHNOLOGIES CO., LTD.) 10 September 2019 (2019-09-10) entire document | 1-16 |
| A | CN 110309856 A (HUAWEI TECHNOLOGIES CO., LTD. et al.) 08 October 2019 (2019-10-08) entire document | 1-16 |
| A | US 2017344808 A1 (SAMSUNG ELECTRONICS CO., LTD.) 30 November 2017 (2017-11-30) entire document | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 June 2021** | **21 June 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/082086**

| Patent document cited in search report | | | Publication date (day/month/year) | Patent family member(s) | | | Publication date (day/month/year) |
|---|---|---|---|---|---|---|---|
| CN | 111507378 | A | 07 August 2020 | None | | | |
| CN | 110147456 | A | 20 August 2019 | None | | | |
| CN | 104517122 | A | 15 April 2015 | None | | | |
| CN | 110222718 | A | 10 September 2019 | None | | | |
| CN | 110309856 | A | 08 October 2019 | WO | 2020238293 | A1 | 03 December 2020 |
| US | 2017344808 | A1 | 30 November 2017 | KR | 20170134158 | A | 06 December 2017 |
| | | | | US | 2020202109 | A1 | 25 June 2020 |
| | | | | US | 2018307897 | A1 | 25 October 2018 |

Form PCT/ISA/210 (patent family annex) (January 2015)

**REFERENCES CITED IN THE DESCRIPTION**

**Patent documents cited in the description**

- CN 202010214454